# EUROPÄISCHE PATENTANMELDUNG

(11) **EP 1 837 257 A2**
(43) Veröffentlichungstag der Anmeldung: **26.09.2007**
(21) Anmeldenummer: 07005802.9
(22) Anmeldetag: 21.03.2007
(51) Int. Cl.: B60S 1/38

(54) **Wischblatteinheit**

(30) Priorität: 22.03.2006 DE 202006004584 U
(71) Anmelder: AGOR GmbH & Co. KG, 99869 Schwabhausen (DE)
(72) Erfinder: Loose, Felix, 99689 Schwabhausen (DE)
(74) Vertreter: Grünecker, Kinkeldey, Stockmair & Schwanhäusser Anwaltssozietät

(57) **Zusammenfassung**

Die vorliegende Erfindung betrifft eine Wischblatteinheit zum Ausliefern vom Fahrzeugen mit einem Wischblatt (1) mit einer gummielastischen Wischleiste (3), die an einem langgestreckten federelastischen Tragelement (2) angeordnet ist, welches an der der Wischleiste (3) gegenüberliegenden Oberseite von einer Windabweisleiste (4) abgedeckt ist, und einer Schutzschiene (5), die zur lösbaren Aufnahme des Wischblattes (1) eine die Wischleiste (3) aufnehmende und mit ihren Rändern das Wischblatt (1) umgreifende Wischblattaufnahme (5a) und eine Schutzschienenwischleiste (5b) umfasst, die im Wesentlichen in Verlängerung der Wischleiste (3) vorgesehen ist. Mit der vorliegenden Erfindung wird eine wirtschaftlich herzustellende Wischblatteinheit angegeben, die hierzu an der Schutzschiene (5) beiderseits der Wischleiste (3) ausgebildete Eingriffstaschen (8) zum Eingriff von die Wischblattaufnahme (5a) spreizenden Spreizfingern (11) aufweist. Mit der vorliegenden Erfindung wird ferner ein Verfahren zur Herstellung einer solchen Wischblatteinheit angegeben, bei der die Wischblattaufnahme durch wenigstens einen antreibbaren Spreizfinger (11) so gespreizt wird, dass das Wischblatt (1) in die so gespreizte Wischblattaufnahme (5a) eingebracht werden kann. Des Weiteren wird mit der vorliegenden Erfindung ein Verfahren zur wirtschaftlichen Herstellung einer Schutzschiene (5) angegeben. Bei diesem Verfahren werden zwei Wischblattaufnahme (5a) mit einem diese beiden verbindenden Mittelteil im Wege der Co-Extrusion hergestellt. Das Mittelteil ist aus einem die Schutzschienenwischblattleiste (5b) bildenden Material gebildet. Nach der Co-Extrusion wird dieses Mittelteil durchtrennt, so dass zwei separate Schutzschienen (5) entstehen.

## Beschreibung

Die vorliegende Erfindung betrifft eine Wischblatteinheit mit den oberbegrifflichen Merkmalen von Anspruch 1. Eine derartige Wischblatteinheit ist beispielsweise aus der WO 20061082149 bekannt. Die vorliegende Erfindung betrifft ferner ein Verfahren zur Herstellung einer entsprechenden Wischblatteinheit und des Weiteren ein Verfahren zur Herstellung einer zu der Wischblatteinheit gehörenden Schutzschiene.

Eine Wischblatteinheit wird bei der ersten Ausstattung von Kraftfahrzeugen an den Wischerarm angebracht, vorzugsweise über einen an dem Tragelement angeordneten Adapter an den Wischerarm angeklipst. Um bis zur Auslieferung des Fahrzeuges an den Endkunden das Wischblatt zu schonen und insbesondere die Wischleiste nicht zu beeinträchtigen, wird bei der Erstausstattung die Wischleiste von einer Schutzschiene umgeben, die eine Schutzschienenwischleiste umfasst. Die Schutzschiene hat hierzu eine Halterung zur lösbaren Befestigung der Schutzschiene am Wischblatt. Regelmäßig wird diese Halterung durch eine Wischblattaufnahme gebildet, welche üblicherweise das Wischblatt im Bereich des Tragelementes seitlich umgreift und im Wesentlichen in Verlängerung der Wischleiste die Schutzschienenwischleiste trägt, die bei Betätigung des Wischerarmes beispielsweise beim Verladen des Fahrzeuges bis zur Übergabe an den Endkunden die Scheibe überstreicht und somit wischt.

Die Fachwelt ist bemüht, die Befestigung der Schutzschiene an dem Wischblatt zu verbessem. Dabei geht es zum einen darum, die Schutzschiene so zu befestigen, dass diese sicher an dem Wischblatt gehalten werden kann. Zum anderen soll aber auch eine leichte Entfernung der Schutzschiene ohne Beeinträchtigung der Qualität des Wischblattes möglich sein. Schließlich sollen sich Wischblatt und Schutzschiene leicht fügen lassen.

Mit der vorliegenden Erfindung soll eine Wischblatteinheit angegeben werden, in welcher Wischblatt und Schutzschiene leicht gefügt werden können und bei der beide Teile der Einheit nach dem Fügen sicher miteinander verbunden sind. Darüber hinaus soll sich die Wischblatteinheit und hierbei insbesondere die Schutzschiene wirtschaftlich herstellen lassen. Hierzu wird mit der vorliegenden Erfindung ein Verfahren zur Herstellung der Schutzschiene angegeben.

Zur Lösung des obigen Problems wird mit der vorliegenden Erfindung eine Wischblatteinheit mit den Merkmalen von Anspruch 1 angegeben. Bei dieser Wischblatteinheit weist die Schutzschiene beiderseits der Wischleiste Eingriffstaschen zum Eingriff von die Wischblattaufnahme spreizenden Spreizfingern auf.

Bei der erfindungsgemäßen Wischblatteinheit hat die Schutzschiene Eingriffstaschen, in welche ein passend hierzu ausgebildeter Spreizfinger eingreifen kann. Dieser Spreizfinger und damit die zugeordnete Eingriffstasche erstreckt sich vorzugsweise über die gesamte Längserstreckung der Schutzschiene und sind dementsprechend schienenförmig ausgebildet. Jeder Spreizfinger läuft zu seinem vorderen, in die Eingriffstasche eingreifenden Ende vorzugsweise spitz zu, ist jedoch bevorzugt mit einer leichten Verdickung an seinem Ende vorgesehen, um eine Verletzung der Schutzschiene bei in der Eingriffstasche befindlichen Spreizfinger zu vermeiden. Vorzugweise weist jede Schutzschiene einander exakt gegenüberliegende Eingriffstaschen auf, welche in Bezug auf eine die Schutzschienenwischleiste enthaltende Mittellängsachse der Schutzschiene spiegelsymmetrisch zueinander verwirklicht sind.

Im Hinblick auf einen möglichst einfachen und wirkungsvollen Eingriff der Spreizfinger in die Eingriffstaschen sind diese zu der Unterseite geöffnet. Die Unterseite wird hierbei durch diejenige Seite gebildet, an der sich die Schutzschienenwischleise befindet bzw. zu der sich die Wischleiste vom Tragelemente erstreckt. Die nach unten offenen Eingriffstaschen haben vorzugsweise einen oberseitigen Dachabschnitt, welcher sich im Wesentlichen quer zu der Mittellängsachse der Schutzschiene erstreckt und an der der Eingriffstasche gegenüberliegenden Seite die Wischblattaufnahme begrenzt. Die Innenseite der Eingriffstasche, d.h. die zu der Wischblattaufnahme zeigende Begrenzung derselben wird vorzugsweise durch eine Wulst gebildet, welche die Aufnahme für die Wischleiste nach außen begrenzt. Die äußere Begrenzung der Eingriffstasche wird vorzugsweise durch einen von dieser Aufnahme jedenfalls nach unten abragenden Steg begrenzt.

Bei der erfindungsgemäßen Wischblatteinheit umgreift die Schutzschiene das gesamte Wischblatt und wird - entgegen dem vorbekannten Stand der Technik - nicht an dem Wischblatt befestigt. Dementsprechend können mit der Schutzschiene der erfindungsgemäßen Wischblatteinheit Wischblätter unterschiedlicher Gummilippengeometrie und Breite umhüllt werden. Die Schutzschiene der erfindungsgemäßen Wischblatteinheit kann danach mit einer Vielzahl von Wischblättern kombiniert werden. Darüber hinaus umhüllt die Schutzschiene der erfindungsgemäßen Wischblatteinheit die gesamte Wischleiste. Bei einer Erstausstattung der Fahrzeuge mit einem Wischblatt und späterem Einwachsen des Fahrzeuges vor der Auslieferung ist daher nicht zu befürchten, dass die Wischleiste mit dem Wachs in Berührung kommt, wodurch deren Wirksamkeit beeinträchtigt wird.

Mit der vorliegenden Erfindung wird ferner ein Verfahren zur Herstellung einer Wischblatteinheit angegeben. Bei diesem erfindungsgemäßen Verfahren zur Herstellung einer Wischblatteinheit durch Anbringen einer Schutzschiene an einem Wischblatt wird eine Wischblattaufnahme der Schutzschiene durch wenigstens einen antreibbaren Spreizfinger gespreizt. Die Schutzschiene hat hierzu geeignete Eingriffstaschen, in die die Spreizfinger eingreifen können. Einer der Spreizfinger kann dabei ortsfest und der andere beweglich gelagert sein. Alternativ können auch beide Spreizfinger relativ zueinander und für sich beweglich sein. Bei dem erfindungsgemäßen Verfahren wird die Wischblattaufnahme durch die Spreizfinger gespreizt, d.h. motorbetrieben geöffnet, so dass das Wischblatt in die so gespreizte Wischblattaufnahme eingebracht werden kann. Dem erfindungsgemäßen Verfahren liegt das Konzept zugrunde, die Schutzschiene möglichst so weit zu öffnen, dass zum Einbringen des oder der in der Schutzschiene gehaltenen Teils des Wischblattes keine gesonderten Kräfte notwendig sind, mit denen die Schutzschiene gespreizt wird.

Gemäß einer bevorzugten Weiterbildung der vorliegenden Erfindung wird die Wischblattaufnahme so durch die Spreizfinger gespreizt, dass die durch Spreizen geweitete Einbringöffnung der Wischblattaufnahme breiter als das Wischblatt ist. Bei dieser bevorzugten Weiterbildung wird insbesondere davon ausgegangen, dass ein Tragelement des Wischblatts und ein dieses umgreifender elastischer Körper in Querrichtung des Tragelementes und in etwa auf Höhe des Tragelementes den breitesten Teil des Wischblatts bilden. Dieser soll bei einer motorbetriebenen Spreizung der Schutzschiene durch die so ausgebildete Einbringöffnung passen.

Zur wirtschaftlichen Herstellung der Schutzschiene wird mit der vorliegenden Erfindung ferner ein Verfahren angegeben, dass für sich efindungsgemäß ist und bei dem zunächst zwei Wischblattaufnahmen mit einem diese verbindenden Mittelteil im Wege der Co-Extrusion hergestellt werden. Das auf diese Weise gebildete Bauteil wird mittig getrennt. Dabei wird das Mittelteil in etwa in der Mitte zwischen den beiden Wischblattaufnahmen durchtrennt, so dass das Mittelteil die jeweiligen, fest mit den Wischblattaufnahmen verbundenen Schutzschienenwischleisten bildet. Das Mittelteil wird dementsprechend im Wege der Co-Extrusion aus demjenigen Material hergestellt, welches besagte Schutzschienenwischleiste ausbildet.

Weitere Einzelheiten und Vorteile der vorliegenden Erfindung ergeben sich aus der nachfolgenden Beschreibung eines Ausführungsbeispiels in Verbindung mit der Zeichnung.

In dieser zeigen:
- Fig. 1A bis 1C: ein erstes Ausführungsbeispiel der erfindungsgemäßen Wischblatteinheit in Querschnittansicht in verschiedenen Phasen beim Fügen von Wischblatt und Schutzschiene und
- Fig. 2: die Wischblatteinheit nach dem Fügen für ein alternatives Ausführungsbeispiel einer Schutzschiene.

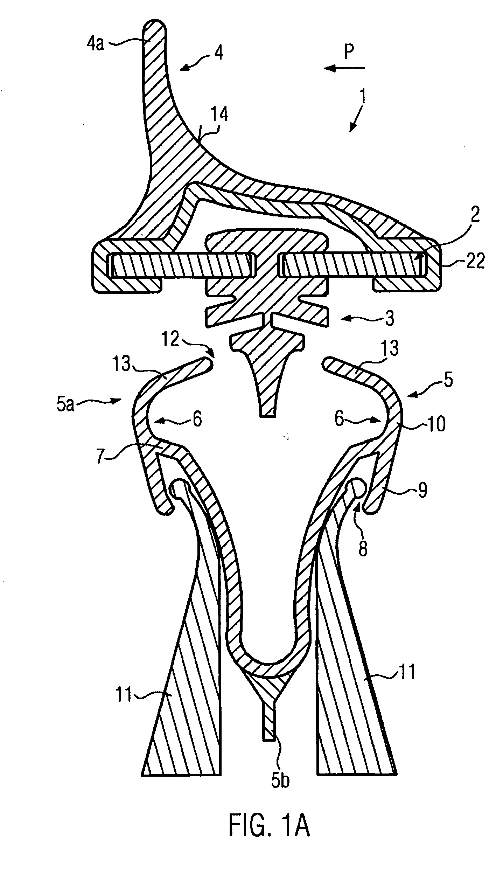

Die Fig. 1A bis 1C zeigen jeweils ein Wischblatt 1 mit langgestrecktem federelastischem Tragelement 2 aus zwei parallel zueinander ausgerichteten Federstahlblättem, zwischen denen eine Wischleiste 3 geklemmt gehalten ist. Einzelheiten dieser Ausgestaltung sind der EP 1 597 120 sowie den beiden prioritätsbegründenden Anmeldungen zu dieser europäischen Anmeldung zu entnehmen, auf die vorliegend verwiesen wird. Lediglich der Vollständigkeit halber sei darauf hingewiesen, dass das Wischblatt 1 ferner eine Windabweisleiste 4 umfasst, die an der der Wischleiste 3 gegenüberliegenden Oberseite vorgesehen und an dem Tragelement 2 montiert ist und über eine konkav gebogene Anströmfläche 14 in Anströmrichtung Pfeil P einen Anströmsteg 4a ausbildet, der sich im Wesentlichen rechtwinklig zu dem bandförmigen Trageelement 2 erstreckt.

In den Figuren 1A bis 1C ist ferner eine Schutzschiene 5 zu erkennen, die bezogen auf die Mittellängsachse der Wischleiste 3 symmetrisch ausgestaltet ist und in ihrem oberen Bereich eine Wischblattaufnahme 5a ausbildet, die an ihrem unteren, leicht zulaufenden Ende eine Schutzschienenwischleiste 5b trägt. Die Wischblattaufnahme 5a ist aus einem thermoplastischen, vorzugsweise hartelastischen Kunststoff gebildet und zusammen mit der aus einem weichelastischen Kunststoff gebildeten Schutzschienenwischleiste 5b durch Co-Extrusion hergestellt. Üblicherweise werden zwei Schutzschienen im Wege der Co-Extrusion parallel hergestellt, und zwar mit einer weichelastischen, beide Wischblattaufnahmen 5a verbindenden Mittelteil, das zur Ausbildung der jeweiligen Schutzschienenwischleisten 5b zu einer Wischblattaufnahme 5a mittig durchtrennt wird. Durch diese Maßnahme wird der Verzug bei der Extrusion vermieden.

Das in der Zeichnung gezeigte Ausführungsbeispiel einer Schutzschiene 5 hat einen oberen, birnenförmig auseinandergehenden Bereich zur seitlichen Umfassung des Tragelementes 2 zusammen mit den das Tragelement 2 umgebenden Rändern der Windabweisleiste 4. Dort hat die Wischblattaufnahme 5a einen Aufnahmebereich maximaler Größe 6, der ober- und unterseitig von diesen inwärtig überragenden Wandungen der Wischblattaufnahme 5a begrenzt wird. Eine diesen Aufnahmebereich 6 maximaler Größe unterseitig begrenzende Wandung 7 der Wischblattaufnahme 5a begrenzt oberseitig eine nach unten offene Eintrittstasche 8. Die Eingriffstasche 8 wird außenseitig durch einen Wandsteg 9 begrenzt, der leicht nach innen, ansonsten aber im Wesentlichen nach unten geneigt ist und kontinuierlich einen den Aufnahmebereich 6 maximaler Größe begrenzenden Wandabschnitt 10 fortsetzt. Zwischen dem Wandsteg 9 und der die Wischblattaufnahme 5a begrenzenden Wandung befindet sich die oberseitig von der Wandung 7 begrenzte Eingriffstasche 8.

Zur Montage von Wischblatt 1 und Schutzschiene 5 fahren lediglich mit ihrem oberen Ende in den Fig. 1A bis 1C gezeigte Spreizfinger 11 von unten in die Eingriffstaschen 9 ein. Die Spreizfinger 11 können translatorisch und/oder verschwenkbar gegeneinander beweglich gelagert sein. Bei dem gezeigten Ausführungsbeispiel ist eine translatorische Beweglichkeit der Spreizfinger 11 in einer Richtung rechtwinklig zu der Mittellängsachse der Wischleiste 3 angedeutet. Nachdem die Spreizfinger 11 in die Eingriffstaschen 8 eingebracht worden sind, werden die freien Enden der jeweiligen Eingriffsfinger 11 voneinander beabstandet.

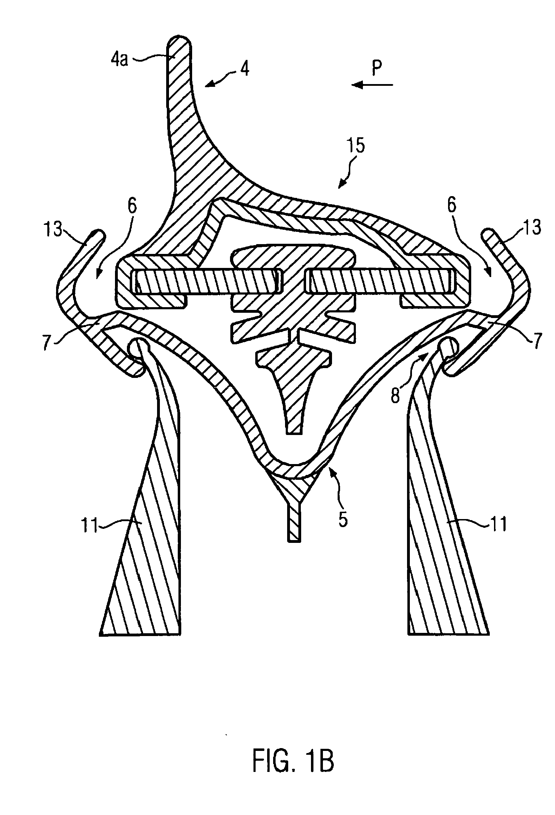

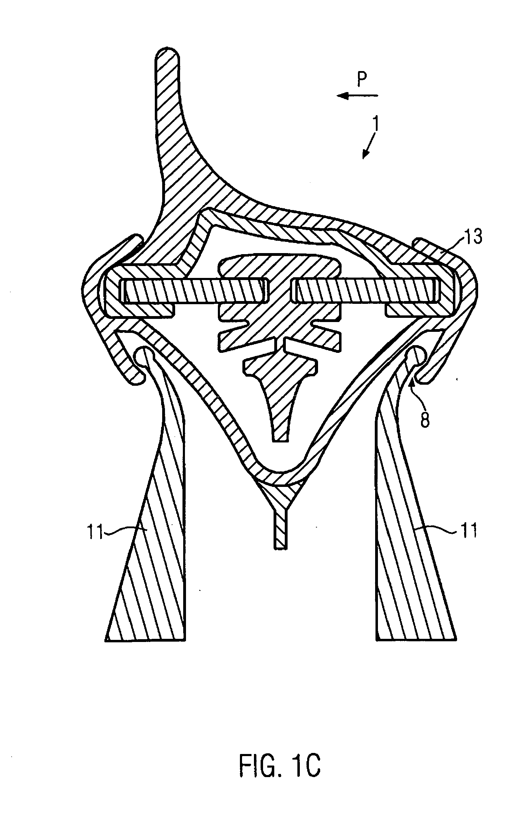

Hierbei werden die eine Aufnahmeöffnung 12 zu der Wischblattaufnahme 5a begrenzende Anlagestege 13 voneinander voneinander beabstandet, bis die in Fig. 1 B gezeigte Stellung maximaler Spreizung erreicht ist. In dieser Stellung sind die einander zugerichteten Enden der Anlagestege 13 so weit voneinander entfernt, dass das Wischblatt 1 mit seiner breitesten Stelle in die Wischblattaufnahme 5a eingebracht werden kann. Das Wischblatt 1 und die Schutzschiene 5 werden nun aufeinander zu gestellt, bis das Wischblatt 1 gegen die den Aufnahmebereich 6 maximaler Größe unterseitig an die begrenzende Wandung 7 anliegt. Danach werden die Spreizfinger 11 aufeinander zu gestellt. Hierzu kann beispielsweise eine beim Spreizen der Spreizfinger 11 aufgebrachte elastische Vorspannung entlastet werden. Die Endposition ist in Fig. 1C gezeigt.

Zwischen dem Aufnahmebereich 6 maximaler Größe und dem unteren, die Schutzschienenwischleiste 5b tragenden Ende der Schutzschiene 5 ist die die Wischblattaufnahme 5a begrenzende Wandung nach außen leicht konkav gekrümmt. In ähnlicher Weise gekrümmt sind die oberen Enden der Spreizfinger 11. Dies führt dazu, dass bei einer zunehmenden Bewegung der Spreizfinger 11 aufeinander zu zunächst die Spreizung der Schutzschiene 5 vermindert wird, bis diese das Wischblatt 1 umfasst. Danach legen sich die Spreizfinger 11 mit ihren gegenüberliegenden Innenseiten an die konkav gewölbte Wandung an und drücken so die aus Wischblatt und Schutzschiene gebildete Wischblatteinheit nach oben von den Spreizfingern 11 weg. Die Einheit kann danach ohne weiteres entnommen werden. Insbesondere besteht nicht die Gefahr, dass sich die Wischblatteinheit beim Lösen von den Spreizfingern 11 an diesem verfängt.

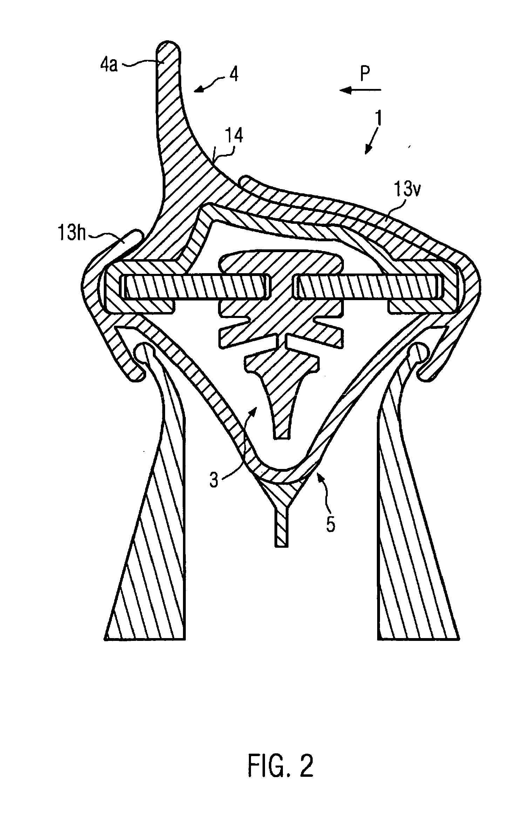

In Fig. 2 ist eine modifizierte Ausführungsform einer Schutzschiene gezeigt, bei welcher die Anlagestege asymmetrisch angeordnet sind. Es gibt einen an der Oberseite in Anströmrichtung (vgl. Pfeil P) vorne angeordneten Anlagesteg 13v und einen hinteren, wesentlich kürzeren Anlagesteg 13h. Der längere vordere Anlagesteg 13v ist so dimensioniert, dass er bis über die Mittellängsachse der Wischleiste 3 ragt und an eine Anströmfläche 14 angelegt werden kann, die durch die Windabweisleiste 4 an ihrem in Strömrichtung P vorderen Teil in Form einer konkaven Außenfläche ausgebildet wird. Diese Ausgestaltung erlaubt eine besonders sichere Verankerung der Schutzschiene 5 an dem Wischblatt 1 und verstärkt die Anpresskraft zwischen dem Anlagesteg 13 und Wischblatt 1 insbesondere bei höheren Fahrgeschwindigkeiten.

Zur Herstellung der vorstehend beschriebenen Wischleisteneinheit kann durch die Spreizfinger 11 die Schutzschiene 5 mit ihrer Aufnahmeöffnung zur Ausbildung einer die Breite des Wischblatts 1 an seiner breitesten Stelle überschreitenden Einbringöffnung gespreizt werden, so dass das Wischblatt 1 ohne Berührung in die Schutzschiene 5 mit seinem Tragelement 2 eingebracht werden kann. Die Ausbildung von Eingriffstaschen 8 und das damit einhergehende motorbetriebene Spreizen des Schutzschiene bietet darüber hinaus den Vorteil, dass das Material der Schutzschiene im Bereich der neutrale Phase konzentriert werden kann. Wischblätter sind üblicherweise in einer sich rechtwinklig zu der Zeichnungsebene der Figuren erstreckenden Ebene gekrümmt. Mit zunehmender Materialanhäufung au-ßerhalb der neutraler Faser, insbesondere durch die Schutzschiene 5 besteht das Problem, dass die Wischblatteinheit nur unzureichend an die gekrümmte Kontur der Windschutzscheibe des Fahrzeuges angepasst werden kann. Bei einer flächenmäßigen Anlage der Schutzschienenwischleiste 5b an die Windschutzscheibe kann es zum Ablösen der Schutzschiene 5 von dem Wischblatt 1 kommen. Dies wird mit der vorliegenden Erfindung vermieden, da das überwiegende, die Schutzschiene 5 bildende Material im Bereich der neutralen Phase konzentriert werden kann. Die Schutzschiene 5 und insbesondere die Ausbildung und Anordnung der Eingriffstaschen 8 kann hierzu angepasst werden. Ziel ist ein möglichst geringes Flächenträgheitsmoment der Wischblatteinheit in Bezug auf die Biegeachse des Wischblattes 1, welches durch das zusätzliche Material der Schutzschiene 5 begründet wird.

### Bezugszeichenliste

- 1: Wischblatt
- 2: Tragelement
- 3: Wischleiste
- 4: Windabweisleiste
- 4a: Anströmsteg
- 5: Schutzschiene
- 5a: Wischblattaufnahme
- 5b: Schutzschienenwischleiste
- 6: Aufnahmebereich maximaler Größe
- 7: Wandung
- 8: Eingriffstasche
- 9: Wandsteg
- 10: Wandaschnitt
- 11: Spreizfinger
- 12: Aufnahmeöffnung
- 13: Anlagesteg
- 14: Anströmfläche
- P: Richtungsangabe der Anströmrichtung bei Vorwärtsfahrt

## Patentansprüche

1. Wischblatteinheit zum Ausliefern von Fahrzeugen mit einem Wischblatt (1) mit einer gummielastischen Wischleiste (3), die an einem bandartig langgestreckten federelastischen Tragelement (2) angeordnet ist, welches an der der Wischleiste (3) gegenüberliegenden Oberseite von einer Windabweisleiste (4) abgedeckt ist, und einer Schutzschiene (5), die zur lösbaren Aufnahme des Wischblattes (1) eine die Wischleiste (3) aufnehmende und mit ihren Rändern das Wischblatt (1) umgreifende Wischblattaufnahme (5a) und eine Schutzschienenwischleiste (5b) umfasst, die im Wesentlichen in Verlängerung der Wischleiste (3) vorgesehen ist,
**dadurch gekennzeichnet,**
**dass** die Schutzschiene (5) beiderseits der Wischleiste (3) Eingriffstaschen (8) zum Eingriff von die Wischblattaufnahme (5a) spreizenden Spreizfingern (11) aufweist.

2. Wischblatteinheit nach Anspruch 1, **dadurch gekennzeichnet, dass** die Eingriffstaschen (8) sich zu der die Schutzschienenwischleiste (5b) aufweisenden Unterseite öffnen.

3. Wischblatteinheit nach Anspruch 1 oder 2, **dadurch gekennzeichnet, dass** die Eingriffstaschen (8) sich unmittelbar hinter einem das Tragelement (2) seitlich fassenden Aufnahmebereich (6) maximaler Größe anschließen.

4. Wischblatteinheit nach Anspruch 3, **dadurch gekennzeichnet, dass** die Außenseite der Eingriffstaschen (8) kontinuierlich in den den Aufnahmebereich (6) maximaler Größe begrenzenden Wandabschnitt (10) übergehen.

5. Wischblatteinheit nach einem der vorhergehenden Ansprüche, **dadurch gekennzeichnet, dass** die Windabweisleiste (4) in Bezug auf die Mittellängsachse der Wischleiste (3) asymmetrisch mit einer an der Oberseite in Anströmrichtung (P) vorne angeordneten langen Anströmfläche (14) und einer auf der Rückseite eines Anströmsteges (4a) angeordneten Rückfläche ist und dass die Wischblattaufnahme (5a) einen bis über die Mittellängsachse der Wischleiste (3) ragenden und an die Anströmfläche (14) anlegbaren langen Anlagesteg (13v) aufweist.

6. Schutzschiene zur lösbaren Aufnahme des Wischblattes umfassend eine Wischleiste aufnehmende und mit ihren Rändern das Wischblatt umgreifende Wischblattaufnahme (5a) und eine Schutzschienenwischleiste (5b), die mittig zu einem Wischleistenaufnahmebereich (6) der Wischblattaufnahme vorgesehen ist,
**dadurch gekennzeichnet,**
**dass** die Schutzschiene (5) beiderseits der Schutzschienenwischleiste (5b) Eingriffstaschen (8) zum Eingriff von die Wischblattaufnahme (5a) spreizenden Spreizfingern (11) aufweist.

7. Schutzschiene nach Anspruch 6, **dadurch gekennzeichnet, dass** sich die Eingriffstaschen (8) zu der die Schutzschienenwischleiste (5b) aufweisenden Unterseite der Schutzschiene (5) öffnen.

8. Schutzschiene nach einem der Ansprüche 5 oder 7, **dadurch gekennzeichnet, dass** die Wischblattaufnahme (5a) asymmetrisch mit einem bis über die Mittellängsachse der Schutzschienenwischleiste (5b) ragenden und die Wischblattaufnahme (5a) begrenzenden langen Anlagesteg (13v) und einem gegenüberliegend vorgesehenen kurzen Anlagesteg (13h) ausgebildet ist.

9. Verfahren zur Herstellung einer Wischblatteinheit durch Anbringen einer Schutzschiene (5) an einem Wischblatt (1), bei dem eine Wischblattaufnahme (5a) durch wenigstens einen antreibbaren Spreizfinger (11) gespreizt und das Wischblatt (1) in die so gespreizte Wischblattaufnahme (5a) eingebracht wird.

10. Verfahren nach Anspruch 9, **dadurch gekennzeichnet, dass** die Wischblattaufnahme (5a) so durch die Spreizfinger (11) gespreizt wird, dass die durch Spreizen geweitete Einbringöffnung der Wischblattaufnahme (5a) breiter als das Wischblatt (1) ist.

11. Verfahren zur Herstellung einer lösbar an einem Wischblatt (1) zu befestigenden Schutzschiene (5) mit einer Wischblattaufnahme (5a) und einer Schutzschienenwischleiste (5b),
**dadurch gekennzeichnet,**
**dass** zwei Wischblattaufnahmen (5a) mit einem diese verbindenden Mittelteil, welches aus dem Material der Schutzschienenwischleiste (5b) gebildet ist, im Wege der Co-Extrusion hergestellt werden und dass das Mittelteil zur Ausbildung von separaten Wischblattaufnahmen (5a) mit daran angeformten Schutzschienenwischleisten (5b) mittig durchtrennt wird.
